(19) **Europäisches Patentamt / European Patent Office / Office européen des brevets**

(11) **EP 2 351 707 A1**

(12) **EUROPEAN PATENT APPLICATION**
published in accordance with Art. 153(4) EPC

(43) Date of publication:
**03.08.2011 Bulletin 2011/31**

(21) Application number: **09823376.0**

(22) Date of filing: **03.06.2009**

(51) Int Cl.:
*C01B 33/18* (2006.01)      *C09D 7/12* (2006.01)
*C09D 201/00* (2006.01)      *C09D 183/00* (2006.01)

(86) International application number:
**PCT/JP2009/060195**

(87) International publication number:
**WO 2010/050263 (06.05.2010 Gazette 2010/18)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.10.2008 JP 2008281135**

(71) Applicant: **Asahi Glass Company Limited**
**Chiyoda-ku**
**Tokyo 100-8405 (JP)**

(72) Inventors:
• **KAWAI, Yohei**
  **Tokyo 100-8405 (JP)**
• **YONEDA, Takashige**
  **Tokyo 100-8405 (JP)**

(74) Representative: **Müller-Boré & Partner**
**Patentanwälte**
**Grafinger Straße 2**
**81671 München (DE)**

(54) **HOLLOW PARTICLE, METHOD FOR PRODUCING THE SAME, COATING COMPOSITION AND ARTICLE**

(57)   To provide dense hollow particles having a thin shell, a process for simply producing the hollow particles at low cost, a coating composition for forming a coating film having a high antireflection property and an article having a coating film having a high antireflection property.

Hollow particles each composed of a shell made of silicon oxide as the main component, wherein the thickness of the shell is from 0.5 to 4 nm, and in the histogram of the pore volume obtained by the nitrogen adsorption method, the maximum value of the pore volume is from 0.01 to 0.08 mUg within the range of the pore diameter of at most 3 nm.

Fig. 1

EP 2 351 707 A1

**Description**

TECHNICAL FIELD

The present invention relates to hollow particles, a production process thereof, a coating composition containing the hollow particles, and an article having a coating film made of the coating composition.

BACKGROUND ART

As a coating film having an antireflection effect, a coating film containing hollow particles made of silicon oxide, and a binder has been known.

The hollow particles can be obtained by forming a shell made of silicon oxide on a surface of core particles to obtain core-shell particles, followed by dissolving the core particles of the core-shell particles.

Further, in order to improve an antireflection effect of the coating film, it is necessary to make the thickness of the shell of the hollow particles thin and lower the refractive index of the hollow particles.

However, there is a problem such that since fine pores are formed in the shell of the hollow particles, if the thickness of the shell of the hollow particles is made to be thin, a binder infiltrates into cavities through the fine pores, and the refractive index of the hollow particles becomes high.

On the other hand, in order to prevent the binder from infiltrating into cavities, a method is proposed such that core particles of core-shell particles are dissolved, and then the shell is made to be dense (Patent Documents 1 and 2).

PRIOR ART DOCUMENTS

PATENT DOCUMENTS

Patent Document 1: JP-A-2001-233611
Patent Document 2: JP-A-2006-021938

DISCLOSURE OF INVENTION

TECHNICAL PROBLEM

However, in the method described in Patent Documents 1 and 2, there is a problem such that the thickness of the shell becomes thick along making the shell dense, and the refractive index thereby becomes high. Further, there is a problem in the method of Patent Documents 1 and 2 such that since core particles are dissolved after preparing the core-shell particles, the shell is made to be dense after removing core dissolved components, and then a purification step is carried out, many production steps are required, and the production cost thereby becomes high.

The present invention provides dense hollow particles having a thin shell, a method for simply producing the hollow particles at a low cost, a coating composition for forming a coating film having a high antireflection effect and an article having a coating film having a high antireflection effect.

SOLUTION TO PROBLEM

The hollow particles of the present invention are each composed of a shell made of silicon oxide as the main component, wherein the thickness of the shell is from 0.5 to 4 nm, and in the histogram of the pore volume obtained by the nitrogen adsorption method, the maximum value of the pore volume is from 0.01 to 0.08 mUg within the range of the pore diameter of at most 3 nm.

The process for producing the hollow particles as one embodiment of the present invention, comprises a step of heating a liquid containing core particles and an alkoxysilane to from 20 to 80°C to form a shell made of silicon oxide as the main component on each of the core particles and obtain a dispersion containing the core-shell particles; a step of heating the dispersion containing the core-shell particles to from 100 to 500°C; and a step of dissolving or decomposing the core particles of the core-shell particles contained in the dispersion to obtain a dispersion containing the hollow particles.

The process for producing the hollow particles as another embodiment of the present invention, comprises a step of heating a liquid containing core particles made of a material having a dielectric constant of at least 10, and an alkoxysilane to from 100 to 500°C by irradiation with microwaves to form a shell made of silicon oxide as the main component on each of the core particles and obtain a dispersion containing the core-shell particles; and a step of dissolving or decomposing the core particles of the core-shell particles contained in the dispersion to obtain a dispersion containing the hollow particles.

The coating composition of the present invention contains the hollow particles and a dispersion medium.

The article of the present invention comprises a substrate and a coating film made of the coating composition on the substrate.

ADVANTAGEOUS EFFECTS OF INVENTION

The hollow particles of the present invention have a thin and dense shell.

According to the process for producing the hollow particles of the present invention, hollow particles having a thin and dense shell can be simply produced at a low cost.

A coating film having a high antireflection effect can be produced with the coating composition of the present invention.

The articles of the present invention has a coating film having a high antireflection effect.

BRIEF DESCRIPTION OF DRAWING

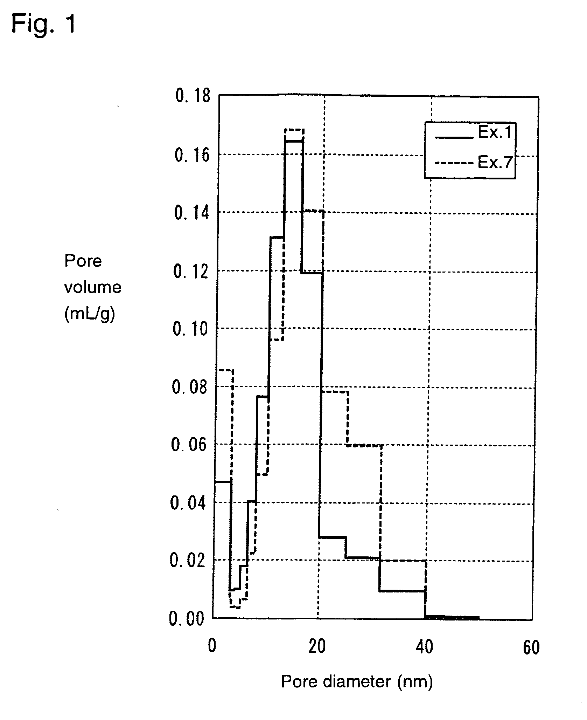

Fig. 1 is a histogram of the pore volume of the hollow particles obtained in Examples 1 and 7.

Further, the following shows digital data of histogram of the pore volume of Examples 1 and 7 shown in Fig. 1.

|  | Pore Volume(cc/g) | |
| --- | --- | --- |
| Pore Width (nm) | Example 1 | Example 7 |
| 2.511886 | 4.71 E-02 | 8.57E-02 |
| 3.162278 | 9.51 E-03 | 6.81 E-03 |
| 3.981072 | 9.94E-03 | 3.36E-03 |
| 5.011872 | 1.79E-02 | 8.15E-03 |
| 6.309573 | 4.03E-02 | 2.24E-02 |
| 7.943282 | 7.63E-02 | 4.97E-02 |
| 9.999999 | 7.63E-02 | 4.97E-02 |
| 12.589253 | 1.31 E-01 | 9.60E-02 |
| 15.848931 | 1.64E-01 | 1.68E-01 |
| 19.952622 | 1.19E-01 | 1.40E-01 |
| 25.118863 | 2.81 E-02 | 7.81 E-02 |
| 31.622774 | 2.12E-02 | 5.96E-02 |
| 39.810717 | 9.77E-03 | 1.94E-02 |
| 50.118722 | 9.19E-04 | 5.51 E-04 |

DESCRIPTION OF EMBODIMENT

<Hollow Particles>

Hollow particles are particles each having an cavity in the interior of the shell (outer shell). The hollow particles may, for example, be spherical hollow particles, fibrous hollow particles, tubular hollow particles or sheet-form hollow particles. The fibrous hollow particles are hollow particles of which the length in the extended direction is longer than the length in the direction perpendicular to the extended direction. The fibrous hollow particles may be primary particles or may be secondary particles which are agglomerates of a plurality of hollow particles.

The hollow particles of the present invention contain silicon oxide as the main component.

The content of silicon oxide is preferably at least 90 mass%, more preferably from 95 to 100 mass% in the hollow particles (100 mass%), from the viewpoint of keeping the refractive index of the hollow particles low.

The thickness of the shell of the hollow particles is from 0.5 to 4 nm, preferably from 1 to 3 nm. When the thickness of the shell is at least 0.5 nm, sufficient strength can be obtained. When the thickness of the shell is at most 4 nm, the refractive index can be kept low, and core particles can easily be eluted at a time of producing the hollow particles.

The thickness of the shell can be controlled by production conditions of the hollow particles (such as the amount of an alkoxysilane, reaction temperature or reaction time).

The thickness of the shell is a value obtained by randomly selecting 100 particles by observing the hollow particles by a transmission electron microscope, measuring the thickness of the shell of each hollow particle and calculating the average of the thickness of the shell of 100 hollow particles.

In the histogram of the pore volume obtained by the nitrogen adsorption method, the maximum value of the pore volume is from 0.01 to 0.08 mUg within the range of the pore diameter of at most 3 nm, preferably from 0.01 to 0.05 mUg. When the maximum value of the pore volume is at least 0.01 mUg within the range of the pore diameter of at most 3 nm, core particles tend to be easily eluted at the time of producing hollow particles, and as a result, the material of the core particles will not remain in cavities, and the refractive index can be kept low. When in the histogram of the pore volume obtained by the nitrogen adsorption method, the maximum value of the pore volume is at most 0.08 mUg within the range of the pore diameter of at most 3 nm, the shell becomes dense, whereby when formed into a coating film, a binder can be prevented from infiltrating into cavities, and as a result, the refractive index can be kept low. Here, the range of the pore diameter of at most 3 nm means that by taking the first decimal press into the consideration, the pore diameter of at most 3.4 nm is included.

In order for the hollow particles to show a low refractive index when they are formed into a coating film, the histogram of the pore volume obtained by the nitrogen adsorption method preferably has at least one peak of the pore volume within the range of the pore diameter of at most 3 nm and within the range of the pore diameter of from 10 to 100 nm respectively. The pores observed within the range of the pore diameter of at most 3 nm are pores which are present in the shell of the hollow particles, and the pores observed within the range of the pore diameter of from 10 to 100 nm are hollow parts of the hollow particles and cavities among the particles. The pore structures of the pores which are present in the shell and the cavities of the hollow parts are bottleneck types, and they are not gradually opening type. When the range of the pore diameter of the pores which are present in the shell is at most 3 nm, when the hollow particles are mixed with a binder to prepare a coating solution, the binder can be prevented from infiltrating into cavities of the hollow parts from the pores which are present in the shell, and when a coating film is formed, the low refractive index can be maintained. The histogram of the pore volume may have at least two peaks within the limited range, and the histogram preferably has at least one local minimum value within the range of the pore diameter of from 10 to 100 nm. When the size of the hollow parts and the cavities among the particles is at least 10 nm, clogging of the hollow parts and the cavities among the particles due to firing can be prevented, and a coating film having a low refractive index can be obtained.

When the size of the hollow parts and the cavities among the particles is within the range of at most 100 nm, collapse of the hollow parts due to abrasion can be prevented, whereby a coating film having a high strength can be obtained.

In the histogram of the pore volume obtained by the nitrogen adsorption method, the maximum value of the pore volume is preferably from 0.1 to 1.0 mUg within the range of the pore diameter of from 10 to 100 nm. When in the histogram of the pore volume obtained by the nitrogen adsorption method, the maximum value of the pore volume is at least 0.1 mL/g within the range of the pore diameter of from 10 to 100 nm, the hollow parts are sufficiently large relative to the shell thickness, whereby a coating film having a high antireflection effect can be obtained. When in the histogram of the pore volume obtained by the nitrogen adsorption method, the maximum value of the pore volume is at most 1.0 mUg within the range of the pore diameter of from 10 to 100 nm, the thickness of the shell is sufficiently large relative to the hollow parts, a coating film having a high strength can be obtained.

The average agglomerated particle size of the hollow particles is preferably from 10 to 300 nm, more preferably from 15 to 100 nm.

The average agglomerated particle size of the hollow particles is the average agglomerated particle size of the hollow particles in a dispersion medium and is measured by a dynamic light scattering method.

The average primary particle size of the hollow particles is preferably from 10 to 100 nm, more preferably from 15 to 80 nm.

The average primary particle size of the hollow particles is the average of the particle sizes of 100 hollow particles randomly selected and measured by observation with a transmission electron microscope.

The refractive index of the hollow particles is preferably from 1.05 to 1.25, more preferably from 1.05 to 1.15. When the refractive index of the hollow particles is at least 1.05, the thickness of the shell will not be too thin, and the hollow particles have a sufficient strength. When the refractive index of the hollow particles is at most 1.25, a coating film having a high antireflection effect can be obtained.

The refractive index of the hollow particles is obtained by measuring the lowest reflectance by a spectrophotometer in a state such that the hollow particles are formed into a coating film with a binder, calculating the refractive index of the coating film from the lowest reflectance, and converting the refractive index by the mass ratio of the hollow particles and the binder.

As explained above, since the hollow particles of the present invention have a shell of which the thickness is sufficiently thin, the hollow particles have a sufficiently low refractive index. Further, even though the thickness of the shell is thin, the hollow particles are dense, and thereby when the hollow particles are formed into a coating film, a binder can be prevented from infiltrating into cavities, and as a result the a low refractive index can be kept.

<Process for producing hollow particles>

As the process for producing the hollow particles of the present invention, the following processes (I) and (II) may be mentioned.

The process (I) comprises the following steps (a) to (c):

(a) a step of heating a liquid containing core particles and an alkoxysilane to from 20 to 80°C to form a shell made of silicon oxide as the main component on the surface of each of the core particles and obtain a dispersion containing the core-shell particles;
(b) a step of heating the dispersion containing the core-shell particles obtained in the step (a) to from 100 to 500°C; and
(c) a step of dissolving or decomposing the core particles of the core-shell particles contained in the dispersion obtained in the step (b) to obtain a dispersion containing the hollow particles.

The process (II) comprises the following steps (d) and (e):

(d) a step of heating a liquid containing core particles made of a material having a dielectric constant of at least 10, and an alkoxysilane to from 100 to 500°C by irradiation with microwaves to form a shell made of silicon oxide as the main component on the surface of each of the core particles and obtain a dispersion containing the core-shell particles; and
(e) a step of dissolving or decomposing the core particles of the core-shell particles contained in the dispersion obtained in the step (d) to obtain a dispersion containing the hollow particles.

(Process (I))

Step (a):

A liquid (hereinafter referred to as starting material liquid) containing core particles and an alkoxysilane is heated, and the alkoxysilane is hydrolyzed with an alkali or an acid to let silicon oxide precipitate on the surface of the core particles to form a shell, whereby a dispersion containing the core-shell particles is obtained.

The starting material liquid may, for example, be prepared by adding an alkoxysilane and as a case requires, water, an organic solvent, an alkali or an acid, a curing catalyst or the like to a dispersion which is prepared by dispersing core particles in a dispersion medium.

The core particles may be particles which can be dissolved or decomposed in the step (c). The core particles may, for example, be heat decomposable organic particles (such as surfactant micelles, a water soluble organic polymer, a styrene resin or an acrylic resin), acid soluble inorganic particles (such as zinc oxide, sodium aluminate, calcium carbonate or basic zinc carbonate) or photosoluble inorganic particles (such as zinc sulfide, cadmium sulfate or zinc oxide), and zinc oxide is preferred.

The average agglomerated particle size of the hollow particles in the dispersion is preferably from 10 to 300 nm, more preferably 15 to 100 nm When the average agglomerated particle size of the core particles is at least 10 nm, a surface area per mass of the core particles tends not to increase excessively, and the amount of silicon oxide required for coating the core particles can be reduced. When the average agglomerated particle size of the core particles is at most 300 nm, the dispersion property in the dispersion medium is excellent.

The average agglomerated particle size of the hollow particles in a dispersion medium is measured by a dynamic light scattering method.

The concentration of the core particles in a dispersion is preferably from 0.1 to 40 mass%, more preferably 0.5 to 20 mass% in the dispersion of the core particles (100 mass%). When the concentration of the core particles is at least 0.1 mass%, the efficiency for producing the core-shell particles is excellent. When the concentration of the core particles is at most 40 mass%, the core particles tend not to agglomerate.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethyl sulfoxide).

The dispersion medium preferably contains water in an amount of from 5 to 100 mass% in 100 mass% of the dispersion medium, since water is necessary for hydrolysis of the alkoxysilane.

The alkoxysilane may, for example, be tetramethoxysilane, tetraethoxysilane (hereinafter referred to as TEOS), tetra n-propoxysilane or tetraisopropoxysilane, and TEOS is preferred from the viewpoint of the appropriate reaction rate.

The amount of the alkoxysilane is preferably such an amount that the thickness of the shell becomes from 0.5 to 4 nm, more preferably such an amount that the thickness of the shell becomes from 1 to 3 nm.

The amount of the alkoxysilane (calculated as $SiO_2$) is specifically preferably from 0.1 to 10,000 parts by mass per 100 parts by mass of the core particles.

The alkali may, for example, be potassium hydroxide, sodium hydroxide, ammonia, ammonium carbonate, ammonium hydrogencarbonate, dimethylamine, triethylamine or aniline, and ammonia is preferred, since ammonia can be removed by heating.

The amount of the alkali is preferably such an amount that the pH of the starting liquid becomes from 8.5 to 10.5, more preferably such an amount that the pH of the starting liquid becomes from 9.0 to 10.0, from the viewpoint of easily forming a dense shell by three-dimensionally polymerizing the alkoxysilane.

The acid may, for example, be hydrochloric acid or nitric acid. Further, in a case where zinc oxide particles are used as the core particles, since the zinc oxide particles are easily dissolved with an acid, it is preferred to hydrolyze the alkoxysilane with an alkali.

The amount of the acid is preferably such an amount that the pH of the starting material liquid becomes from 3.5 to 5.5.

The curing catalyst may, for example, be a metal chelate compound, an organic tin compound, a metal alcoholate or a metal fatty acid salt, and from the viewpoint of the strength of the shell, the metal chelate compound and the organic tin compound are preferred, and the metal chelate compound is particularly preferred.

The amount of the curing catalyst (calculated as metal oxide) is preferably from 0.1 to 20 parts by mass, more preferably from 0.2 to 8 parts by mass, per 100 parts by mass of the amount of the alkoxysilane (calculated as $SiO_2$).

The temperature of the starting material liquid is from 20 to 80°C, preferably from 30 to 60°C.

When the temperature of the starting material is at least 20°C, the shell can be formed in a short time. When the temperature of the starting material liquid is at most 80°C, the amount of silicon oxide which precipitates at other than the surface of the core particles can be reduced, and the reaction liquid thereby tends not to undergo gelation.

The heating time is controlled depending on the temperature of the starting material liquid so that a shell having a desired thickness can be formed, and for example, heating time is from 1 to 500 minutes.

The heat source may, for example, be a water bath, oil bath or autoclave.

Step (b):

The dispersion liquid containing core-shell particles is heated to make the shell dense.

The temperature of the dispersion liquid is from 100 to 500°C, preferably from 120 to 300°C.

When the temperature of the dispersion liquid is at least 100°C, a dense shell can be formed in a short time. When the temperature of the dispersion liquid is at most 500°C, the temperature can be easily controlled.

The heating time is controlled depending on the temperature of the dispersion liquid so that a shell having a desired denseness can be formed, and for example, the heating time is from 10 seconds to 200 minutes.

The heat source may, for example, be an oil bath, an autoclave or a microwave heating apparatus.

Step (c):

In a case where the core particles are acid soluble inorganic particles, the core particles can be dissolved and removed by addition of an acid.

The acid may, for example, be an inorganic acid (such as hydrochloric acid, sulfuric acid or nitric acid), an organic acid (such as formic acid or acetic acid) or an acidic cation exchange resin.

(Process (II))

Step (d):

The starting material liquid is heated by irradiation with microwaves, and an alkoxysilane is hydrolyzed with an alkali or an acid to let silicon oxide precipitate on the surface of the core particles, whereby a shell is formed, and a dispersion liquid containing core-shell particles can be obtained.

The starting material liquid is prepared by using the same starting materials and by the same method as in the above step (a).

The dielectric constant of the material for the core particles is at least 10, preferably from 10 to 200, more preferably from 15 to 100. When the dielectric constant of the material for the core particles is at least 10, the material can easily absorb microwaves, and the core particles can be selectively heated to a high temperature by microwaves.

The electric power which is converted to heat in dielectric substances by the irradiation with microwaves is represented by the following formula:

$$P = 2\pi f E^2 \varepsilon \tan\delta$$

(P: electric power, f: frequency, E: strength of electric field, $\varepsilon$: dielectric constant, $\tan\delta$: dielectric loss tangent)

The amount of generated heat is the product of the dielectric constant multiplied by the dielectric loss tangent, and not only the dielectric constant, the higher the dielectric loss tangent is, the more the material is heated. The dielectric loss tangent is preferably from 0.001 to 1, more preferably from 0.01 to 1.

The dielectric constant and the dielectric loss tangent can be calculated from the reflection coefficient and phase values measured by applying an electric field on a sample by a bridge circuit by using a network analyzer.

The material for the core particles is a material having a dielectric constant of at least 10, and preferably a material which can be dissolved and decomposed in the step (c'). The core particles are preferably zinc oxide particles.

Microwaves usually mean electromagnetic waves having a frequency of from 300 MHz to 300 GHz. Microwaves having a frequency of 2.45 GHz is usually used, however, so long as a frequency for effectively heating an object is selected, the frequency is not restricted thereto. In the radio law, a frequency band for using electric waves for so-called ISM band which is an object other than communication is restricted. For example, microwaves such as 433.92 ($\pm$0.87) MHz, 896 ($\pm$10) MHz, 915 ($\pm$13) MHz, 2,375 ($\pm$50) MHz, 2,450 ($\pm$50) MHz, 5,800 ($\pm$75) MHz or 24,125 ($\pm$125) MHz may be used.

The output of microwaves is preferably an output such that the starting material liquid is heated to from 100 to 500°C, more preferably an output such that the starting material liquid is heated to 120 to 300°C.

When the temperature of the starting material liquid is at least 100°C, a dense shell can be formed in a short time. When the temperature of the starting material liquid is at most 500°C, the amount of silicon oxide which precipitates at other than the surface of the core particles can be reduced, and the reaction liquid tends not to undergo gelation.

The heat treatment with microwaves may be carried out by a batch treatment, however, in a case of mass production, a continuous treatment by a flow reactor is more preferred. The method for the irradiation with microwaves may be a single mode, however, in a case of mass production, a multimode which can heat uniformly is more preferred.

Time for the irradiation with microwaves may be adjusted depending on an output of microwaves (the temperature of the starting material liquid) and adjusted to time such that a shell having a desired thickness is formed. For example, the time for the irradiation with microwaves is from 10 seconds to 200 minutes.

Step (e):

The step (e) is a step similar to the above mentioned step (c).

In the above explained process (I), since a shell containing silicon oxide as the main component is formed on the surface of core particles at a relatively low temperature, the reaction liquid tends not to undergo gelation. Further, after the shell is formed, and an alkoxysilane in a reaction liquid is consumed, and before core particles of core-shell particles are dissolved, the shell is made to be dense only by heating, whereby the shell is simply made to be dense without increasing the thickness of the shell.

Further, in the case of the above explained process (II), since a starting material liquid containing core particles made of a material having a dielectric constant of at least 10 and an alkoxysilane is irradiated with microwaves, the core particles can be selectively heated to a high temperature (at least 100°C). Thereby, even though the entire starting material liquid is heated to a high temperature (at least 100°C), since the core particles are heated to a higher temperature, the hydrolysis of the alkoxysilane proceeds on the surface of the core particles in preference, and silicon oxide selectively precipitates on the surface of the core particles. Thus, the amount of silicon oxide which solely precipitates at other than the surface of the core particles can be reduced, and the reaction liquid tends not to undergo gelation. Further, since a shell can be formed under a high temperature condition, a thin and dense shell can be formed in a short time.

<Coating composition>

The coating composition of the present invention contains hollow particles and a dispersion medium and as the case requires, a binder.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethyl sulfoxide).

The binder may, for example, be an alkoxysilane (such as tetramethoxysilane or TEOS), a silicic acid oligomer obtained by hydrolyzing an alkoxysilane, a silicon compound having a silanol group (such as silicic acid or trimethylsilanol), active silica (such as water glass or sodium orthosilicate) or an organic polymer (such as polyethylene glycol, a polyacrylamide derivative or polyvinyl alcohol).

The mass ratio of the hollow particles to the binder (hollow particles/binder) is preferably from 10/0 to 5/5, more preferably from 9/1 to 7/3. When the mass ratio of the hollow particles/binder is within these ranges, a coating film of which the refractive index is kept low, and which has a high antireflection effect, can be formed.

The solid content concentration of the coating composition of the present invention is preferably from 0.1 to 20 mass%.

The coating composition of the present invention may contain hollow particles other than the hollow particles of the present invention or solid fine particles (non-hollow particles) within a range not to impair the effects of the present invention.

The coating composition of the present invention may contain known additives such as an alkaline earth metal salt such as a chloride, a nitrate, a sulfate, a formate or an acetate of e.g. Mg, Ca, Sr or Ba; a curing catalyst such as an inorganic acid, an organic acid, a base, a metal chelate compound, a quaternary ammonium salt or an organic tin compound; inorganic fine particles showing ultraviolet shielding properties, infrared shielding properties or electroconductive properties; or a pigment, a dye or a surfactant.

Further, an additive for a coating material, which is made of an inorganic material and/or an organic material may be blended with the coating composition of the present invention. At least one property selected from the group consisting of hard coat, alkali barrier, coloration, conductivity, antistatic, polarization, ultraviolet shielding, infrared shielding, stain-proof, anti-fogging, photocatalyst, antibacterial, fluorescence, photostorage, refractive index control, water repellency, oil repellency, finger print removal and slip property may be imparted.

Further, to the coating composition of the present invention, depending upon the function required for the coating film, commonly used additives such as an antifoaming agent, a leveling agent, an ultraviolet absorber, a viscosity modifier, an antioxidant and a fungicide may properly be added. Further, to make the coating film have a desired color, various pigments which are commonly used for a coating composition such as titania, zirconia, white lead and red oxide may be blended.

As explained above, since the coating composition of the present invention comprises the hollow particles of the present invention of which the refractive index is kept low, a coating film having a high anti-reflection effect can be formed.

<Article>

The article of the present invention is an article having a coating film comprising the coating composition of the present invention formed thereon.

The thickness of the coating film is preferably from 50 to 300 nm, more preferably from 80 to 200 nm. When the thickness of the coating film is at least 50 nm, interference of light will occur, whereby antireflection performance will be developed. When the thickness of the coating film is at most 300 nm, a film can be formed without cracking.

The thickness of the coating film is obtained by measuring the interface between the coated surface and the non-coated surface by a profilometer.

The refractive index of the coating film is preferably from 1.2 to 1.4, more preferably from 1.23 to 1.35. When the refractive index of the coating film is at least 1.2, the light reflected on the upper film surface and the light reflected on the lower film surface are offset by interference, whereby a coating film having a high antireflection effect is obtained. When the refractive index of the coating film is at most 1.4, the light reflected on the upper film surface and the light reflected on the lower film surface are offset by interference, whereby a coating film having a high antireflection effect will be obtained when glass is used as the substrate. The minimum reflectance of the coating film is preferably from 0.0 to 1.4%, more preferably from 0.0 to 1.0%.

The refractive index of the coating film is calculated from the minimum reflectance measured by a spectrophotometer.

The coating film is formed by applying the coating composition of the present invention to the surface of a substrate and drying it. The coating film is preferably further heated or baked in view of the film strength, and the coating film is preferably baked in a step of reinforcing glass in view of costs.

The material of the substrate may, for example, be glass, a metal, an organic polymer or silicon, and the substrate may be a substrate having any coating film preliminarily formed thereon. The organic polymer may, for example, be polyethylene terephthalate (hereinafter referred to as PET), polycarbonate, polymethyl methacrylate or triacetyl acetate.

The shape of the substrate may, for example, be a plate or a film.

On the article of the present invention, another functional layer (such as an adhesion-improving layer or a protective layer) may be formed within a range not to impair the effects of the present invention. Further, in the present invention, only the coating film of the present invention is preferably formed from the viewpoint of productivity and durability.

A coating film made of an inorganic material and/or an organic material is preliminarily formed on a substrate. Further, at least one property selected from the group consisting of hard coat, alkali barrier, color, conductivity, antistatic, polarization, ultraviolet shielding, infrared shielding, stain-proof, anti-fogging, photocatalyst, antibacterial, fluorescence, photostorage, refractive index control, water repellency, oil repellency, finger print removal and slip property may be imparted to the substrate. Furthermore, a functional coating film made of an inorganic material and/or an organic material may be formed on the coating film formed by applying the coating composition of the present invention, and at least one property selected from the group consisting of hard coat, alkali barrier, color, conductivity, antistatic, polarization, ultraviolet shielding, infrared shielding, stain-proof, anti-fogging, photocatalyst, antibacterial, fluorescence, photostorage, the refractive index control, water repellency, oil repellency, finger print removability and slip property may be imparted.

As the coating method, a known method such as bar coating, die coating, gravure coating, roll coating, flow coating, spray coating, online spray coating, ultrasonic waves spray coating, ink jet or dip coating may be mentioned. The online spray coating is a method of spray coating on the same line for formation of the substrate, and is capable of producing articles at a low cost and is useful, since a step of re-heating the substrate can be omitted.

The above explained article of the present invention has a coating film made of the coating composition of the present invention and thereby has a high antireflection effect.

EXAMPLES

Now, the present invention will be described in further detail with reference to Examples. However, it should be understood that the present invention is by no means restricted to such specific Examples.

Examples 1 to 6 are Examples of the present invention, and Examples 7 to 10 are Comparative Examples.

(Average agglomerated particle size of core particles and hollow particles)

The average agglomerated particle size of the core particles and the hollow particles was measured by a dynamic light scattering particle size analyzer (manufactured by NIKKISO CO., LTD., Microtrac UPA).

(Dielectric constant)

The dielectric constant of the material for the core particles was calculated from values of the reflection coefficient and the phase measured by applying an electric field to a sample by a bridge circuit by using a network analyzer.

(Average primary particle size of hollow particles and the thickness of the shell of hollow particles)

The average primary particle size of the hollow particles and the thickness of the shell of the hollow particles were measured by observing the hollow fine particles by a transmission electron microscope (H-9000, manufactured by Hitachi, Ltd.), randomly selecting 100 hollow particles, measuring the thickness of the shell and the particle size of each hollow fine particles and calculating respective averages of the thickness of the shell and the particle size of 100 hollow fine particles.

(Maximum value of pore volume)

A specific surface area · pore distribution measuring apparatus (AUTOSORB-1 manufactured by Yuasa Ionics Inc.) was used. As a pretreatment, vacuum deaeration was carried out at 90°C for 15 hours, and then a nitrogen adsorption/desorption isotherm was measured at a liquid nitrogen temperature (77.35K). The pore volume histogram was obtained by analyzing the nitrogen adsorption/desorption isotherm by DFT method (Density Functional Theory), and the maximum value of the pore volume was obtained. The measurement was carried out at regular intervals of 40 point within the range of the relative pressure $P/P_0$ of from $10e^{-6}$ to 0.995 with a pressure cross of 2 and an equilibrium time of 3 minutes. Since the hollow particles have micropores (up to 2 nm), mesopores (from 2 to 50 nm) and micropores (larger than 50 nm), the DFT method was employed which is an only analysis method which may be applied to pore distributions of various ranges indiscriminately. Further, since the pore volume histogram is obtained by the DFT method, the maximum value of the pore volume was used as the standard in the histogram.

(Minimum reflectance)

The reflectance of the coating film on the substrate at from 380 to 1,200 nm was measured by a spectrophotometer (manufactured by Hitachi, Ltd., model: U-41 00) to obtain the minimum value of the reflectance (minimum reflectance).

(Refractive index)

The refractive index (measured value) of the hollow particles was obtained by calculating a refractive index (calculated value) of the coating film on the substrate from the minimum reflectance (measured value) and converting it with the mass proportion of the hollow particles and the binder.

The refractive index (calculated value) of the hollow particles was calculated by the product of the volume ratio of silica to air, calculated from the thickness of the shell and the hollow part size obtained from the observation by a transmittance electron microscope multiplied by the refractive index.

EXAMPLE 1

To a 200 mL quartz pressure resistance container, 55.6 g of an aqueous dispersion (average agglomerated particle size: 30 nm, solid content concentration: 20 mass%) of zinc oxide (ZnO: dielectric constant: 18) particles, 6.9 g of TEOS (tetraethoxysilane: solid content concentration as calculated as silicon oxide: 28.8 mass%), 36.9 g of ethanol and 0.6 g of a 28 mass% aqueous ammonia solution were added to prepare a starting material liquid having a pH of 10.

The pressure resistance container was sealed, and then the starting material liquid was heated at 60°C for 60 minutes by using an oil bath (OB) to hydrolyze TEOS and precipitate silicon oxide on the surface of the zinc oxide particles, whereby a shell was formed, and 100 g of a dispersion of the core-shell particles was obtained.

Further, the dispersion of the core-shell particles was heated at 120°C for 30 minutes by using an oil bath to make the shell dense.

100 g of a strongly acidic cation exchange resin (total exchange capacity: at least 2.0 meq/mL) was added to 100 g of the dispersion of the core-shell particles. The mixture was stirred for 1 hour, and after the pH became 4, the strongly acidic cation exchange resin was removed by filtration to obtain a dispersion of hollow particles. The dispersion was concentrated to a solid content concentration of 20 mass% by ultrafiltration.

A part of the dispersion of the hollow particles was sampled, and the dispersion medium was removed from the dispersion by using an rotary evaporator to obtain powdery hollow particles. The thickness of the shell and the maximum value of the pore volume of the hollow particles were measured. Results are shown in Table 1.

To a 200 mL glass container, 1.65 g of the dispersion (solid content concentration: 20 mass%) of the hollow particles, 23.4 g of a silicic acid oligomer solution (solid content concentration: 5 mass%) and 74.95 g of ethanol were added, followed by stirring for 10 minutes to obtain a coating composition 1 (solid content concentration: 1.5 mass%, the proportion of the hollow particles in the solid content: 22 mass%).

To another 200 mL glass container, 3g of the dispersion (solid content concentration: 20 mass%) of the hollow particles, 18 g of a silicic acid oligomer solution (solid content concentration: 5 mass%) and 79 g of ethanol were added, followed by stirring for 10 minutes to obtain a coating composition 2 (solid content concentration: 1.5 mass%, the proportion of the hollow particles in the solid content: 40 mass%).

The coating composition 1 was applied to a surface of a glass substrate (100 mm x 100 mm x 3.5 mm in thickness) wiped with ethanol and spin-coated at a number of revolution of 200 rpm for 60 seconds for uniformalization, and baked at 650°C for 10 minutes to form a coating film having a thickness of 100 nm. A coating film was formed by using the coating composition 2 in the same manner. The minimum reflectance of the coating films was measured. Further, the refractive index of the hollow particles was obtained. Results are shown in Table 1. Since the measured values of the refractive index almost correspond to the calculated values, it is considered that the binder was prevented from infiltrating into cavities. The infiltration of the binder was prevented, because the maximum value of the pore volume within the range of the pore diameter of at most 3 nm was at most 0.08 mUg, and the dense shell was formed. As a result, even though the proportion of particles in the coating film was low, a high antireflection effect was obtained. Further, the pore volume histogram obtained by nitrogen absorption method is shown in Fig. 1.

EXAMPLE 2

100 g of a dispersion of the hollow particles was obtained in the same manner as in Example 1, except that 62.5 g of the aqueous dispersion of zinc oxide particles, 3.5 g of TEOS, 33.7 g of ethanol and 0.3 g of the ammonia aqueous solution were used, and the temperature for making the shell dense was changed to 180°C. The dispersion was concentrated to a solid content concentration of 20 mass% by ultrafiltration.

Further, the powdery hollow particles were obtained by the same operation as in Example 1. The thickness of the shell and the maximum value of the pore volume of the hollow particles were measured. Results are shown in Table 1.

Further, a coating composition 3 (solid content concentration: 1.5 mass%, the proportion of the hollow particles in the solid content: 22 mass%) and a coating composition 4 (solid content concentration: 1.5 mass%, the proportion of the hollow particles in the solid content: 40 mass%) were obtained in the same manner as in Example 1, and coating films were formed in the same manner as in Example 1. The minimum reflectance of the coating films was measured.

Further, the refractive index of the hollow particles was obtained. Results are shown in Table 1. Since the measured values of the refractive index almost correspond to the calculated values, it is considered that the binder was prevented from infiltrating into cavities. The infiltration of the binder was prevented, because the maximum value of the pore volume within the range of the pore diameter of at most 3 nm was at most 0.08 mUg, and the dense shell was formed. As a result, the proportion of the particles in the coating film was low, a high antireflection effect was obtained.

EXAMPLE 3

A starting material liquid was prepared in the same manner as in Example 1.

The pressure resistance container was sealed, and then the starting material liquid was irradiated with microwaves (MW) (the maximum output: 1,000W, frequency: 2.45 GHz) for 3 minutes by using a microwaves heating apparatus, whereby TEOS was hydrolyzed, silicon oxide was precipitated on the surface of zinc oxide particles to form a shell, and 100 g of a dispersion of the core-shell particles was obtained. During the irradiation with microwaves, the temperature of the reaction liquid was 180°C.

The same operation as in Example 1 was carried out to obtain 100 g of a dispersion of the hollow particles. The dispersion was concentrated to solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 5 (solid content concentration: 1.5 mass%, the proportion of the hollow particles in the solid content: 22 mass%) and a coating composition 6 (solid content concentration: 1.5 mass%, the proportion of the hollow particles in the solid content: 40 mass%) were obtained. Then, coating films were formed in the same manner as in Example 1. The minimum reflectance of the coating films was measured. Further, the refractive index of the hollow particles was obtained. Results are shown in Table 1. Since the measured values of the refractive index almost correspond to the calculated value, it is considered that the binder was prevented from infiltrating into cavities. The infiltration of the binders was prevented, because the maximum value of the pore volume within the range of the particle size of at most 3 nm was at most 0.8 mUg, and a dense shell was formed. As a result, even though the proportion of particles in the coating film was low, a high antireflection effect was obtained.

EXAMPLE 4

To a 200 mL quartz pressure resistance container, 50.0 g of an aqueous dispersion (average agglomerated particle size: 70 nm, solid content concentration: 20 mass%) of zinc oxide particles, 5.2 g of TEOS (solid content concentration as calculated as silicon oxide: 28.8 mass%), 44.4 g of ethanol and 0.4 g of a 28 mass% aqueous ammonia solution were added to prepare a starting material liquid having a pH of 10.

The same operation as in Example 1 was carried out to obtain 100 g of a dispersion of the hollow particles. The dispersion was concentrated to a solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 7 (solid content concentration: 1.5 mass%, the proportion of the hollow particles in the solid content: 22 mass%) and a coating composition 8 (solid content concentration: 1.5 mass%, the proportion of the hollow particles in the solid content: 40 mass%) were obtained. Then, coating films were formed by the same manner as in Example 1. The minimum reflectance of the coating films was measured. Further, the refractive index of the hollow particles was obtained. Results are shown in Table 1. Since the measured values of the refractive index almost correspond to the calculated value, it is considered that the binder was prevented from infiltrating into cavities. The infiltration of the binder was prevented, because the maximum value of the pore volume within the range of the particle size of at most 3 nm was at most 0.8 mL/g, and a dense shell was formed. As a result, even though the proportion of particles in the coating film was low, a high antireflection effect was obtained.

EXAMPLE 5

A starting material liquid was prepared in the same manner as in Example 1.

The pressure resistance container was sealed, and then the starting material liquid was stirred at 20°C for 360 minutes, whereby TEOS was hydrolyzed, and silicon oxide was precipitated on the surface of zinc oxide particles to form a shell, and 100 g of a dispersion of the core-shell particles was thereby obtained.

Further, the dispersion of the core-shell particles was heated at 120°C for 30 minutes by using an oil bath to make the shell dense.

The same operation as in Example 1 was carried out to obtain 100 g of a dispersion of the hollow particles. The dispersion was concentrated to solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 9 (solid content concentration: 1.5 mass%, the proportion of the hollow particles in the solid content: 22 mass%) and a coating composition 10 (solid content concentration: 1.5 mass%, the proportion of the hollow particles in the solid content: 40 mass%) were obtained. Then, coating films were formed in the same manner as in Example 1. The minimum reflectance of the coating films was measured. Further, the refractive index of the hollow particles was obtained. Results are shown in Table 1. Since the measured values of the refractive index almost correspond to the calculated value, it is considered that the binder was prevented from infiltrating into cavities. The infiltration of the binder was prevented, because the maximum value of the pore volume within the range of the particle size of at most 3 nm was at most 0.8 mUg, and a dense shell was formed. As a result, even though the proportion of particles in the coating film was low, a high antireflection effect was obtained.

EXAMPLE 6

A starting material liquid was prepared in the same manner as in Example 1.

The pressure resistance container was sealed, and then the starting material liquid was irradiated with microwaves (the maximum output: 1,400W, frequency: 2.45 GHz) for 10 minutes by using a microwaves heating apparatus, whereby TEOS was hydrolyzed, silicon oxide was precipitated on the surface of zinc oxide particles to form a shell, and 100 g of a dispersion of the core-shell particles was obtained. During the irradiation with microwaves, the temperature of the reaction liquid was 280°C.

The same operation as in Example 1 was carried out to obtain 100 g of a dispersion of the hollow particles. The dispersion was concentrated to solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 11 (solid content concentration: 1.5 mass%, the proportion of the hollow particles in the solid content: 22 mass%) and a coating composition 12 (solid content concentration: 1.5 mass%, the proportion of the hollow particles in the solid content: 40 mass%) were obtained. Then, coating films were formed in the same manner as in Example 1. The minimum reflectance of the coating films was measured. Further, the refractive index of the hollow particles was obtained. Results are shown in Table 1. Since the measured values of the refractive index almost correspond to the calculated values, it is considered that the binder was prevented from infiltrating into cavities. The infiltration of the binder was prevented, because the maximum value of the pore volume within the range of the particle size of at most 3 nm was at most 0.8 mL/g, and a dense shell was formed. As a result, even though the proportion of particles in the coating film was low, a high antireflection effect was obtained.

EXAMPLE 7

100 g of a dispersion of the hollow particles was obtained in the same manner as in Example 1, except that the heating treatment for making the shell dense was not carried out. The dispersion was concentrated to solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 13 (solid content concentration: 1.5 mass%, the proportion of the hollow particles in the solid content: 22 mass%), a coating composition 14 (solid content concentration: 1.5 mass%, the proportion of the hollow particles in the solid content: 40 mass%) and compositions 1 and 2 were obtained. Then, coating films were formed in the same manner as in Example 1. The minimum reflectance of the coating films was measured. Further, the refractive index of the hollow particles was obtained. Results are shown in Table 1. Since the measured values of the refractive index were higher than the calculated values, it is considered that the binder infiltrated into cavities. That is, the maximum value of the pore volume within the range of the particle size of at most 3 nm was higher than that in Examples 1 to 6, and the shell denseness was relatively insufficient. As a result, an antireflection effect was low. Further, the histogram of the pore volume obtained by the nitrogen adsorption method is shown in Fig. 1.

EXAMPLE 8

100 g of a dispersion of the hollow particles was obtained in the same manner as in Example 4, except that the heating treatment for making the shell dense was not carried out. The dispersion was concentrated to solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 15 (solid content concentration: 1.5 mass%, the proportion of the hollow particles in the solid content: 22 mass%) and a coating composition 16 (solid content concentration: 1.5 mass%, the proportion of the hollow particles in the solid content: 40 mass%) were obtained. Then, coating films were formed in the same manner as in Example 1.

The minimum reflectance of the coating films were measured. Further, the refractive index of the hollow particles was obtained. Results are shown in Table 1. Since the measured values of the refractive index was higher than the calculated values, it is considered that the binder infiltrated into cavities. That is, the maximum value of the pore volume within the range of the particle size of at most 3 nm is higher than that is Examples 1 to 6, and the shell denseness was relatively insufficient. As a result, an antireflection effect was low.

EXAMPLE 9

100 g of a dispersion of the hollow particles was obtained in the same manner as in Example 1, except that 22.4 g of the aqueous dispersion of zinc oxide particles, 10.4 g of TEOS, 66.3 g of ethanol and 0.9 g of the ammonia aqueous solution were used, and the temperature for making the shell dense was changed to 180°C. The dispersion was concentrated to solid content concentration of 20 mass% by an ultrafiltration.

Further, the same operation as in Example 1 was carried out to obtain powdery hollow particles. The thickness of the shell and the maximum value of the pore volume of the hollow particles were measured. Results are shown in Table 1.

Further, in the same manner as in Example 1, a coating composition 17 (solid content concentration: 1.5 mass%, the proportion of the hollow particles in the solid content: 22 mass%) and a coating composition 18 (solid content concentration: 1.5 mass%, the proportion of the hollow particles in the solid content: 40 mass%) were obtained. Then, coating films were formed in the same manner as in Example 1. The minimum reflectance of the coating films was measured. Further, the refractive index of the hollow particles was obtained. Results are shown in Table 1. The hollow particles were prepared by adjusting the starting material liquid so that the thickness of the shell would be 6 nm. The maximum value of the pore volume within the range of the particle size of at most 3 nm is low at a level of 0.009, and the maximum value of the pore volume within the range of the pore diameter of from 10 to 100 nm is extremely low at a level of 0.067. Therefore, in the case of the core particles of Example 9, it is considered that the material of the core particles remains in cavities. Further, the remaining of the core particles was actually observed by a transmission electron microscope. As a result, the minimum reflectance of the coating film at 22 mass% was 5.03%, and the antireflection effect was extremely low.

EXAMPLE 10

The starting material liquid was prepared in the same manner as in Example 4. The pressure resistance container was sealed, and then, the starting material liquid was heated at 120°C for 30 minutes. However, the starting material liquid gelated, and a dispersion of the core-shell particles could not be obtained.

TABLE 1

| | | | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|---|
| Core particles | Material | | ZnO | ZnO | ZnO | ZnO | ZnO | ZnO | ZnO | ZnO | ZnO | ZnO |
| | Average agglomerated particle size (nm) | | 30 | 30 | 30 | 70 | 30 | 30 | 30 | 70 | 30 | 70 |
| | Dielectric constant | | 18 | 18 | 18 | 18 | 18 | 18 | 18 | 18 | 18 | 18 |
| Conditions for forming shells | Starting material | | TEOS | TEOS | TEOS | TEOS | TEOS | TEOS | TEOS | TEOS | TEOS | TEOS |
| | Heat source | | OB | OB | MW | OB | - | MW | OB | OB | OB | OB |
| | Starting material liquid temperature (°C) | | 60 | 60 | 180 | 60 | 20 | 280 | 60 | 60 | 60 | 120 |
| | Time (min) | | 60 | 60 | 3 | 60 | 360 | 10 | 60 | 60 | 60 | 30 |
| | Frequency (GHz) | | - | - | 2.45 | - | - | 2.45 | - | - | - | - |
| | Maximum output (W) | | - | - | 1000 | - | - | 1400 | - | - | - | - |
| Conditions for making shell dense | Heat source | | OB | OB | - | OB | OB | - | - | - | OB | - |
| | Dispersion temperature | | 120 | 180 | - | 120 | 120 | - | - | - | 180 | - |
| | (°C) (min) Time (min) | | 30 | 30 | - | 30 | 3 | - | - | - | 30 | - |
| Evaluations | Thickness of shell (nm) | | 2 | 1 | 2 | 4 | 2 | 2 | 2 | 4 | 6 | - |
| | Core size (nm) | | 30 | 30 | 30 | 70 | 30 | 30 | 30 | 70 | 30 | - |
| | Maximum value of pore volume (mL/g) | ≦3 nm | 0.047 | 0.036 | 0.012 | 0.042 | 0.049 | 0.010 | 0.086 | 0.094 | 0.009 | - |
| | | 10 to 100 nm | 0.164 | 0.187 | 0.153 | 0.201 | 0.175 | 0.176 | 0.168 | 0.156 | 0.067 | - |
| | Minimum reflectance (%) | 22 mass% | 1.61 | 1.03 | 1.61 | 1.66 | 1.75 | 1.59 | 1.93 | 1.59 | 5.03 | - |
| | | 40 mass% | 0.60 | 0.30 | 0.55 | 0.44 | 0.78 | 0.50 | 1.33 | 1.19 | 7.10 | - |
| | Refractive index | value | 1.15 | | 1.06 1.14 | 1.15 | 1.19 | 1.14 | 1.27 | 1.22 | 1.86 | - |
| | | Calculated value | 1.14 | 1.08 | 1.14 | 1.13 | 1.14 | 1.14 | 1.14 | 1.13 | 1.29 | - |
| ZnO: zinc oxide, TEOS: tetraethoxysilane, MW: microwaves, OB: oil bath | | | | | | | | | | | | | |

The refractive index is kept low by making the thickness of the shell thin, and the shell is made to be dense, whereby the strength of the hollow particles is improved. Further, the pore volume of the shell is controlled within such a range that dissolved components of the core can permeate, and the matrix cannot infiltrate, whereby hollow particles can be obtained in a few steps, and the present invention is thereby advantageous from the viewpoint of costs. By using the hollow particles of the present invention, a high-performance antireflection film can be formed, even though the proportion of the hollow particles is low, whereby the strength of the coating film is high, and the present invention is advantageous from the viewpoint of costs.

INDUSTRIAL APPLICABILITY

The hollow particles of the present invention is useful as e.g. a material for forming an antireflection film.
The article having a coating film made of the coating composition of the present invention formed thereon is useful as e.g. a transparent component for vehicles (such as a head light cover, a side mirror, a front transparent substrate, a side transparent substrate or a rear transparent substrate), a transparent component for vehicles (such as an instrument panel surface), a meter, a building window, a show window, a display (such as a notebook computer, a monitor, LCD, PDP, ELD, CRT or PDA), a LCD color filter, a substrate for a touch panel, a pickup lens, an optical lens, a lens for glasses, a camera component, a video component, a cover substrate for CCD, an optical fiber edge face, a projector component, a copying machine component, a transparent substrate for solar cells, a screen of a cell-phone, a backlight unit component (such as a light guide plate or a cold-cathode tube), a backlight unit component liquid crystal brightness-improving film (such as a prism or a semi-transmissive film), a liquid crystal brightness-improving film, an organic EL light emitting device component, an inorganic EL light emitting device component, a phosphor light emitting device component, an optical filter, an edge face of an optical component, an illuminating lamp, a cover for a light filament, an amplified laser light source, an antireflection film, a polarizing film, an agricultural film, etc.
The entire disclosure of Japanese Patent Application No. 2008-281135 filed on October 31, 2008 including specification, claims, drawings and summary is incorporated herein by reference in its entirety.

**Claims**

1. Hollow particles each composed of a shell made of silicon oxide as the main component, wherein the thickness of the shell is from 0.5 to 4 nm, and in the histogram of the pore volume obtained by the nitrogen adsorption method, the maximum value of the pore volume is from 0.01 to 0.08 mL/g within the range of the pore diameter of at most 3 nm.

2. The hollow particles according to Claim 1, wherein the histogram of the pore volume obtained by the nitrogen adsorption method has at least one peak of the pore volume within the range of the pore diameter of at most 3 nm and within the range of the pore diameter of from 10 to 100 nm respectively.

3. The hollow particles according to Claim 1 or 2, wherein in the histogram of the pore volume obtained by the nitrogen adsorption method, the maximum value of the pore volume is from 0.1 to 1.0 mUg within the range of the pore diameter of from 10 to 100 nm.

4. The hollow particles according to any one of Claims 1 to 3, which have an average primary particle size of from 10 to 100 nm.

5. The hollow particles according to any one of Claims 1 to 4, which have a refractive index of from 1.05 to 1.25.

6. A process for producing the hollow particles as defined in any one of Claims 1 to 5, which comprises the following steps:

    (a) a step of heating a liquid containing core particles and an alkoxysilane to from 20 to 80°C to form a shell made of silicon oxide as the main component on the surface of each of the core particles and obtain a dispersion containing the core-shell particles;
    (b) a step of heating the dispersion containing the core-shell particles obtained in the step (a) to from 100 to 500°C; and
    (c) a step of dissolving or decomposing the core particles of the core-shell particles contained in the dispersion obtained in the step (b) to obtain a dispersion containing the hollow particles.

7. A process for producing the hollow particles as defined in any one of Claims 1 to 5, which comprises the following steps:

> (d) a step of heating a liquid containing core particles made of a material having a dielectric constant of at least 10, and an alkoxysilane to from 100 to 500°C by irradiation with microwaves to form a shell made of silicon oxide as the main component on the surface of each of the core particles and obtain a dispersion containing the core-shell particles; and
> (e) a step of dissolving or decomposing the core particles of the core-shell particles contained in the dispersion obtained in the step (d) to obtain a dispersion containing the hollow particles.

**8.** A coating composition containing the hollow particles as defined in any one of Claims 1 to 5 and a dispersion medium.

**9.** An article which comprises a substrate and a coating film made of the coating composition as defined in Claim 8 on the substrate.

**10.** The article according to Claim 9, wherein the coating film has the lowest reflectance of from 0.0 to 1.4.

## Fig. 1

**INTERNATIONAL SEARCH REPORT**

| International application No. |
| --- |
| PCT/JP2009/060195 |

A. CLASSIFICATION OF SUBJECT MATTER
*C01B33/18*(2006.01)i, *C09D7/12*(2006.01)i, *C09D201/00*(2006.01)i, *C09D183/00* (2006.01)n

According to International Patent Classification (IPC) or to both national classification and IPC

B. FIELDS SEARCHED

Minimum documentation searched (classification system followed by classification symbols)
C01B33/00-33/46, C09D1/00-201/10

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2006-335881 A (Asahi Glass Co., Ltd.), 14 December, 2006 (14.12.06), & US 2008/0124539 A1 & EP 1887059 A1 & WO 2006/129411 A1 | 1-10 |
| A | JP 2006-335605 A (Asahi Glass Co., Ltd.), 14 December, 2006 (14.12.06), & US 2008/0241474 A1 & EP 1886972 A1 & WO 2006/129408 A1 | 1-10 |
| A | JP 2006-021938 A (Catalysts & Chemicals Industries Co., Ltd.), 26 January, 2006 (26.01.06), (Family: none) | 1-10 |

|☒| Further documents are listed in the continuation of Box C. | |☐| See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 June, 2009 (22.06.09) | 30 June, 2009 (30.06.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/060195 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2001-233611 A  (Catalysts & Chemicals Industries Co., Ltd.), 28 August, 2001 (28.08.01), (Family: none) | 1-10 |
| A | JP 2006-256921 A  (Nagoya Institute of Technology), 28 September, 2006 (28.09.06), (Family: none) | 1-10 |
| A | JP 2005-263550 A  (President of Nagoya Institute of Technology), 29 September, 2005 (29.09.05), (Family: none) | 1-10 |
| A | JP 2008-247664 A  (JSR Corp.), 16 October, 2008 (16.10.08), (Family: none) | 1-10 |
| A | JP 2000-500113 A  (Rhodia Chimie), 11 January, 2000 (11.01.00), & US 6221326 B1        & WO 1997/040105 A1 & FR 2747669 A1 | 1-10 |

Form PCT/ISA/210 (continuation of second sheet) (April 2007)

**EP 2 351 707 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001233611 A
- JP 2006021938 A
- JP 2008281135 A